# EUROPEAN PATENT APPLICATION

(11) **EP 4 418 149 A1**
(43) Date of publication of application: **21.08.2024**
(21) Application number: 23205301.7
(22) Date of filing: 23.10.2023
(51) Int. Cl.: G06F 17/15, G06N 3/0464, G06N 3/063

(54) **CONVOLUTION LAYER PROCESSOR AND METHOD**

(30) Priority: 17.02.2023 RO 202300073
(71) Applicant: NXP B.V., 5656 AG Eindhoven (NL)
(72) Inventor: Fuks, Adam, 5656AG Eindhoven (NL); Kimelman, Paul, deceased (NL); Mindru, Iancu Ciprian, 5656AG Eindhoven (NL); Peterson, Fred William, 5656AG Eindhoven (NL); Avram, Andrei-Alexandru, 5656AG Eindhoven (NL); Despotovici, Mihai, 5656AG Eindhoven (NL)
(74) Representative: Miles, John Richard

(57) **Abstract**

The disclosure relates to a convolution layer processor for a neural network accelerator and to a method of operating a convolution layer processor. Example embodiments include a convolution layer processor (500) for a neural network accelerator, comprising: a memory access module (501) configured to access elements of an input feature map comprising a first array of pixels from a memory (508); and a plurality of convolution modules (314₀₋ₓ), each convolution module configured to receive an element of the input feature map from the memory access module (501) and perform a convolution operation on the received element of the input feature map with a convolution kernel comprising a second array of pixels to provide a corresponding element of an output feature map, the memory access module (501) comprising: a DMA requester (503) configured to request elements of the input feature map from the memory (508) via a data bus (504); a data buffer (502) configured to provide the requested elements to each of the plurality of convolution modules (314₀₋ₓ); and a pad supervisor module (507) configured to provide to the data buffer (502), for each element requested by the DMA requester (503), padding pixels of the input feature map if the requested element extends beyond a boundary of the input feature map.

## Description

### Field

The disclosure relates to a convolution layer processor for a neural network accelerator and to a method of operating a convolution layer processor.

### Background

Neural networks (NNs) are used in many artificial intelligence (Al) applications such as image recognition, natural language processing, etc. In general, NNs extract high-level features from raw sensory data. The extractions, however, comes at a cost of high computational complexity. General-purpose compute engines, especially graphics processing units (GPUs), have been used for much NN processing. However, GPUs are limited in their processing power, and cannot keep up with the increasing computational demands of NN processing. Dedicated NN accelerators can provide relatively faster performance.

A core operation of NN processors involves convolution operations, which are used for, among other things, deep NNs to transform input data arrays into output data arrays by applying a convolution kernel sequentially to elements of the input data array. Convolutional NNs may be built from multiple convolution operations in which, by processing input data arrays through multiple convolution operations, salient information from the input data can be determined. An example of an input array is image data, which may be processed by a convolutional NN to output information relating to content of the image, for example to identify an object in the image.

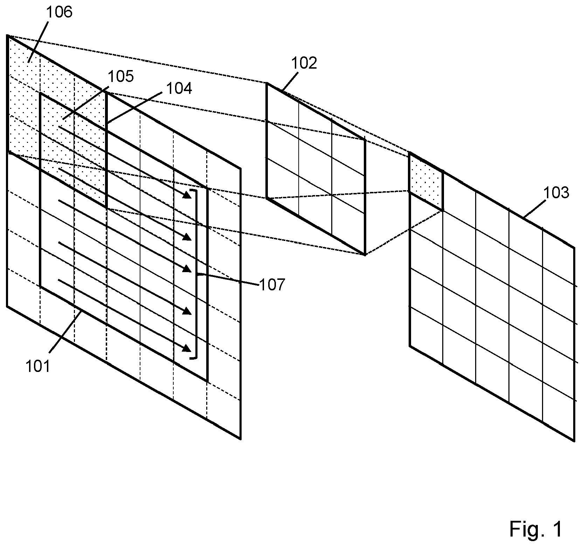

A single convolution operation on an input data array, which may be termed an input tensor or input feature map, involves traversing a convolution kernel across the input feature map to produce an output data array, or output feature map. An example of a convolution operation is illustrated in Figure 1, in which an input feature map 101, in this example in the form of a two dimensional 5x5 array, is convolved with a kernel 102, in the form of a 3x3 array, to provide an output feature map 103, also in this case a 5x5 array. The kernel 102 is applied in this example to each pixel of the input feature map 101 sequentially by scanning the kernel 102 across the pixels of the input feature map and calculating the value of the corresponding pixel of the output feature map 103. Scanning the kernel 102 across the input feature map 101 may be carried out by traversing the input feature map 101 from left to right across each row, as indicated by arrows 107 in Figure 1. In each convolution operation the kernel 102 is applied to an array 104 of pixels that includes the pixel 105 defining the current position across the input feature map 101. The current pixel 105 may, as in the illustrated example, be the centre pixel of a 3x3 array. For pixels along an edge of the input feature map 101, additional padding pixels 106 are required around the edges of the input feature map 101 to enable the convolution kernel 102 to map on to a corresponding array of pixels 104.

The absolute and relative sizes of the input and output feature maps and the convolution kernel may vary according to the application. The input feature map may also have more than two dimensions, with each pixel in a two dimensional input feature map having multiple layers. The spacing of steps taken when sequentially traversing the input feature map, i.e. the distance between two successive kernel positions, may also vary. The spacing, typically termed the stride, is the number of pixels the convolution kernel is moved between each operation. If the stride is 1, the convolution kernel is applied to each and every pixel of the input feature map. If the stride is 2, which may for example be used when downsampling an input feature map, the convolution kernel is applied to every other pixel of the input feature map. The form of convolution kernel may also vary, for example in terms of its dilation, which indicates a spacing between the pixels of the input feature map the kernel is applied to. With a dilation of 1, as in the example in Figure 1, the kernel 102 is applied to a corresponding array 104 of the input feature map. With a dilation of 2, the kernel 102 is applied to a larger portion of the input feature map, with outer pixels of the kernel 102 applied to pixels spaced apart from the centre pixel 105 of the input feature map 101. In such cases, as well as where the kernel 102 has dimensions of more than 3x3, the padding 106 required for the input feature map 101 will need to be greater than 1 pixel wide. The padding therefore needs to be specific to the particular combination of input feature map and kernel. Typically the input feature map 101 and associated padding 106 are stored in memory so that a convolution module or engine can retrieve the pixel values for each convolution operation as if the input feature map 101 were a larger size. This involves additional memory beyond that required to store just the input feature map data. A further issue is that traversing the input feature map 101 pixel by pixel requires many sequential operations. Convolution operations on an input feature map can be carried out in parallel by using multiple convolution engine pipelines, also termed compute pipes, each pipeline applying the same kernel to different positions on the input feature map simultaneously, thereby speeding up the convolution operation on the input feature map in proportion to the number of pipelines used.

### Summary

According to a first aspect there is provided a convolution layer processor for a neural network accelerator, comprising:
a memory access module configured to access elements of an input feature map comprising a first array of pixels from a memory; and
a plurality of convolution modules, each convolution module configured to receive an element of the input feature map from the memory access module and perform a convolution operation on the received element of the input feature map with a convolution kernel comprising a second array of pixels to provide a corresponding element of an output feature map,
the memory access module comprising:
   a DMA requester configured to request elements of the input feature map from the memory via a data bus;
   a data buffer configured to provide the requested elements to each of the plurality of convolution modules; and
   a pad supervisor module configured to provide to the data buffer, for each element requested by the DMA requester, padding pixels of the input feature map if the requested element extends beyond a boundary of the input feature map.

The pad supervisor module may be configured to suppress data read requests from the DMA requester for any padding pixels of the input feature map.

The pad supervisor module may comprise:
padding value logic configured to determine when data is to be loaded from the memory via the buffer interface and when padding values are to be inserted;
padding value insertion logic configured to insert padding values; and
padding read logic configured to allow data read requests from the DMA requester to the memory via the buffer interface only for elements requiring no padding.

The convolution modules may be configured to operate in parallel.

The DMA requester may be configured to request subsequent elements of the input feature map from the memory while the convolution modules are processing current elements of the input feature map.

The DMA requester may be configured to request a plurality of elements of the input feature map, the plurality of elements having a stride defining a separation between adjacent ones of the plurality of elements across a width of the input feature map and a dilation defining a separation between adjacent ones of the plurality of elements across a height of the input feature map.

The DMA requester may be configured to request the plurality of elements of the input feature map for the respective plurality of convolution modules according to a sequence defined by a nested series of loops comprising a first loop defining elements across the width of the input feature map and a second loop defining elements across the height of the input feature map. The nested series of loops is a single set that serves all of the convolution modules. The series of loops includes within an inner loop an address adjustment based on a separate count from a selectable count start position. The adjustment is temporary, in that it does not affect the address calculations of the outer loops.

The stride may be greater than one and the pipeline loader module configured to request one or more subsequent pluralities of elements from the input feature map with a starting point shifted along the width of the input feature map relative to a preceding starting point.

The dilation may be greater than one and the pipeline loader module configured to request one or more subsequent pluralities of elements from the input feature map with a starting point shifted along the height of the input feature map relative to a preceding starting point.

The plurality of convolution modules may comprise 16 convolution modules.

The pad supervisor module may be configured to provide a padding pixel for a requested element of the input feature map if a position of the requested element is from a position that is selected from:
a position across the width of the input feature map that is smaller than a left padding width of the input feature map;
a position across the width of the input feature map that is larger than the left padding width plus a width of the input feature map;
a position across the height of the input feature map that is smaller than a top padding width of the input feature map; and
a position across the height of the input feature map that is larger than the top padding width plus the height of the input feature map.

According to a second aspect there is provided a neural network accelerator comprising the convolution layer processor according to the first aspect, the neural network accelerator comprising a bus interface configured to receive input feature map data from the memory via a system bus.

According to a third aspect there is provided a method of operating a convolution layer processor for a neural network accelerator, the convolution layer processor comprising:
a memory access module configured to access elements of an input feature map comprising a first array of pixels from a memory; and
a plurality of convolution modules, each convolution module configured to receive an element of the input feature map from the memory access module and perform a convolution operation on the received element of the input feature map with a convolution kernel comprising a second array of pixels to provide a corresponding element of an output feature map,

the memory access module comprising:
a DMA requester configured to request elements of the input feature map from the memory via a data bus;
a data buffer configured to provide the requested elements to each of the plurality of convolution modules; and
a pad supervisor module configured to provide to the data buffer (502), for each element requested by the DMA requester, padding pixels of the input feature map if the requested element extends beyond a boundary of the input feature map,
the method comprising:
   the DMA requester requesting a plurality of elements of the input feature map from the memory;
   the pad supervisor module providing, for each of the requested plurality of elements extending beyond the boundary of the input feature map, a padding pixel to the data buffer and, for each of the requested elements within the input feature map, an element stored in the memory to the data buffer;
   the data buffer providing the requested plurality of elements to the plurality of convolution modules; and
   the plurality of convolution modules performing a convolution operation on the corresponding plurality of elements in parallel.

The pad supervisor module may suppress a data read request from the data requester to the memory for any padding pixels.

The padding pixel data may not be stored in the memory.

The DMA requester may request subsequent elements of the input feature map from the memory while the convolution modules are processing current elements of the input feature map.

The plurality of elements may have a stride defining a separation between adjacent ones of the plurality of elements across a width of the input feature map and a dilation defining a separation between adjacent ones of the plurality of elements across a height of the input feature map.

The DMA requester may request the plurality of elements of the input feature map for the respective plurality of convolution modules according to a sequence defined by a nested series of loops comprising a first loop defining elements across the width of the input feature map and a second loop defining elements across the height of the input feature map.

The stride may be greater than one and the DMA requester may request one or more subsequent pluralities of elements from the input feature map with a starting point shifted one pixel along the width of the input feature map relative to a preceding starting point.

The dilation may be greater than one and the DMA requester may request one or more subsequent pluralities of elements from the input feature map with a starting point shifted one pixel along the height of the input feature map relative to a preceding starting point.

The plurality of convolution modules may comprise 16 convolution modules.

The pad supervisor module may provide a padding pixel for a requested element of the input feature map if a position of the requested element is from a position that is selected from:
a position across the width of the input feature map that is smaller than a left padding width of the input feature map;
a position across the width of the input feature map that is larger than the left padding width plus a width of the input feature map;
a position across the height of the input feature map that is smaller than a top padding width of the input feature map; and
a position across the height of the input feature map that is larger than the top padding width plus the height of the input feature map.

These and other aspects of the invention will be apparent from, and elucidated with reference to, the embodiments described hereinafter.

### Brief description of Drawings

Embodiments will be described, by way of example only, with reference to the drawings, in which:
Figure 1 is a schematic diagram of an example convolution operation performed on an input feature map to provide an output feature map;
Figure 2 is a schematic diagram of an example integrated circuit employing a NN accelerator;
Figure 3 is a schematic diagram illustrating components of the data storage and compute block of the integrated circuit of Figure 2;
Figure 4 is a schematic diagram illustrating a convolution operation on a two dimensional input feature map;
Figure 5 is a schematic diagram illustrating components of an example convolution layer processor; and
Figures 6 to 10 are schematic diagrams illustrating a sequence of read locations for a plurality of parallel compute pipes.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar feature in modified and different embodiments.

### Detailed description of embodiments

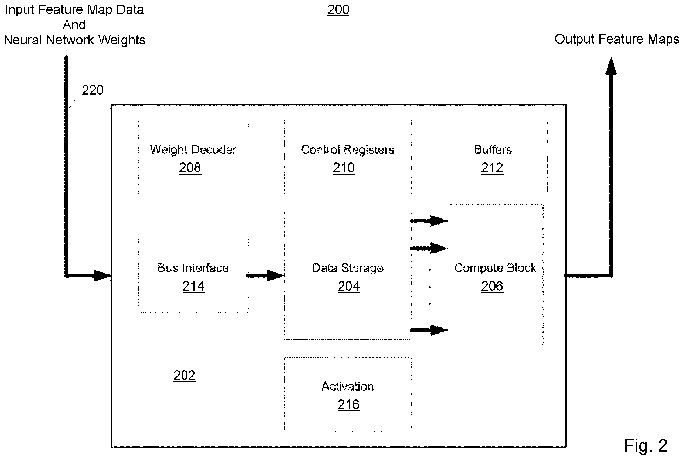

Figure 2 is a schematic diagram of an integrated circuit 200 that employs an NN accelerator 202, derived from EP4024205A1. The accelerator 202 includes a data storage circuit 204 in data communication with a compute block circuit 206. As is more fully described in EP4024205A1 and described below, the compute block circuit 206 includes a plurality of compute pipes, each including a plurality of data processing circuits. Each compute pipe can perform a function such as a partial or full dot product of a kernel and data block. The accelerator 202 further includes a neural network weight decoder circuit 208, a set of control registers 210, buffers 212 that can temporarily store data, a bus interface circuit 214 and an activation circuit 216. The weight decoder 208 can translate encoded weights using a table. The activation circuit 216 can selectively apply a non-linear activation function such as Sigmoid, TanH, and ReLU to the outputs of the compute block circuit 206.

The accelerator 202 is coupled to a system bus 220, which in turn is connected to other components, such as memory (not shown). The accelerator 202 is configured to receive input feature map data and neural network weights from memory via the system bus 220. The data storage circuit 204 can load data processing circuits within each compute pipe of compute block circuit 206 with data. The data processing circuits process the data received from the data storage circuit 204. For example, each data processing circuit of a compute pipe can be configured to multiply data of a data block with a neural network weight of a kernel provided by the weight decoder circuit 208. The data processing circuits operate in parallel.

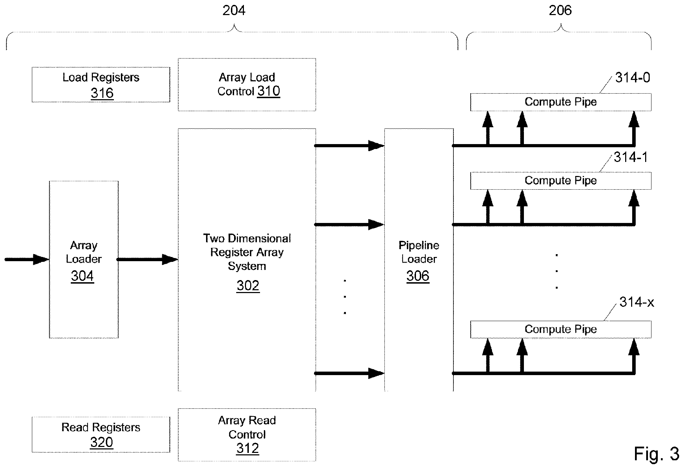

Figure 3 is a block diagram illustrating relevant components of the example data storage circuit 204 and compute block circuit 206. The data storage circuit 204 includes a two dimensional array of registers 302 (hereinafter array 302) coupled between an array load control circuit 304 and a pipeline loader circuit 306. In addition, the data storage circuit 204 includes an array-load control circuit 310 that selects sub arrays of registers into which data is to be written by the array loader circuit 304. The array load control circuit 310 selects a position, height (i.e. number or rows) and width (i.e., number of columns) of the sub arrays based upon position, height, and width information contained within the load registers 316. The data storage circuit 204 also includes an array-read control circuit 312 that selects multiple sub arrays of registers within array 302 from which the pipe loader control circuit 306 reads data in parallel. The array-read control circuit 312 selects positions, height and width of the sub arrays based upon position, height, and width information contained within read registers 320. The pipe loader control circuit 306 loads the data processing circuits of compute pipes 314 with data read from the selected sub arrays, respectively, in parallel.

The two-dimensional array 302 facilitates data reuse amongst the compute pipes 314. In one sense, the two-dimensional array 302 can be thought of as a two-dimensional circular data buffer. The array loader circuit 304 can continuously load registers in the array 302 after the data contents of those registers have been consumed by the compute pipes 314 (i.e., the data is no longer needed for subsequent computations). A central processing unit (CPU not shown) within or connected to the integrated circuit 200, or other similar device that executes instructions stored in memory, can program the array-load control circuit 310 via load registers 316. More particularly, the values stored into load registers 316 by the CPU configure a load pattern (e.g., height and width of the sub arrays of registers into which data from memory is stored by array loader circuit 304) that is dependent on the type of NN layer to be implemented. Sub arrays within the array 302 are sequentially loaded with sets (e.g., 4, 8 or 16) of data D received via the system bus. For example, if the system bus is 4 bytes wide, and the CPU sets the load pattern height value to two, then 2x2 sub arrays of registers will be selected by array load control circuit 510 to store 4 bytes of data as the data arrives. The array loader circuit 304 can load selected register arrays, one below the other, until a vertical dimension defined by another value written to load registers 316, is complete. The loading will continue for as many vertical dimension steps as specified.

The pipeline loader circuit 306 can concurrently read from sub arrays of registers within the array 302, one below another, that are selected by the array-read control circuit 312. The selected sub arrays can overlap each other. The CPU can program the array-read control circuit 310 via registers 320 to define the sub array pattern by which pipe loader circuit 306 reads data from array 302. More particularly, the values stored into read registers 320 by the CPU configure a read pattern (e.g., height and width of the sub arrays of registers from data read by pipe loader circuit 306) that is dependent on the type of NN layer to be implemented. The pipeline loader circuit 306 loads the data processing circuits of compute pipes 314 in parallel with the data read from the selected sub arrays. After each read operation by the pipeline loader circuit 306, the array-read control circuit 312 can select the next set of sub arrays by effectively shifting the horizontal and/or vertical positions of pointers within the array 302, at which the pipe loader circuit 306 reads data from sub array registers in the next cycle. In this manner, the pipe loader circuit 306 can read from any sub array of registers within the array 302. Again, the pipeline loader circuit 306 can read registers in parallel and load the data in parallel into data processing circuits of compute pipes 314. When data is fully consumed within a region of registers of the array 302, the array-load control circuit 310 can shift the load points where the array loader circuit 304 overwrites the consumed data with new data that is received from memory. Further details of the operation of the accelerator 202 are provided in EP4024205A1.

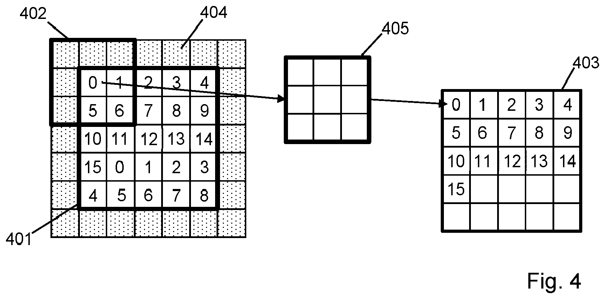

Figure 4 illustrates a simple example of a 5x5 input feature map being convolved with a 3x3 kernel 405 using 16 convolution pipelines to provide a 5x5 output feature map 403, i.e. corresponding to a case where x=15 in the example illustrated in Figure 3. A first element 402 of the input feature map 401 is indicated as a 3x3 array of pixels corresponding to the 3x3 convolution kernel 405. Sequential pixels in the input feature map 401 are identified according to the pipelines numbered from 0 to 15 to which each 3x3 element of the input feature map (plus associated padding) is assigned by the pipeline loader 306. The stride, which in this example is 1, causes the elements to traverse each row of the input feature map pixel by pixel until the end of each row, followed by a step to the start of the next row. Once all 16 pipelines are allocated an input feature map element, the process repeats by loading a subsequent set of positions of the input feature map and, after the convolution modules have completed convolution operations on the previous elements, provides the subsequent set of sequential elements to the respective convolution modules. The process is repeated until the input feature map 401 is fully traversed, which in this case involves all pixels of the input feature map 401 having been convolved to produce the output feature map 403, which in this case has the same 5x5 dimensions as the input feature map 401.

Padding pixels 404 are added around the boundary of the input feature map 401 according to the convolution operation being carried out. In this case, a 3x3 kernel 405 is convolved with each pixel of the input feature map and surrounding pixels, which requires a single pixel width padding around the input feature map 401 so that the convolution operation is provided inputs for pixels that extend beyond the boundary of the input feature map 401.

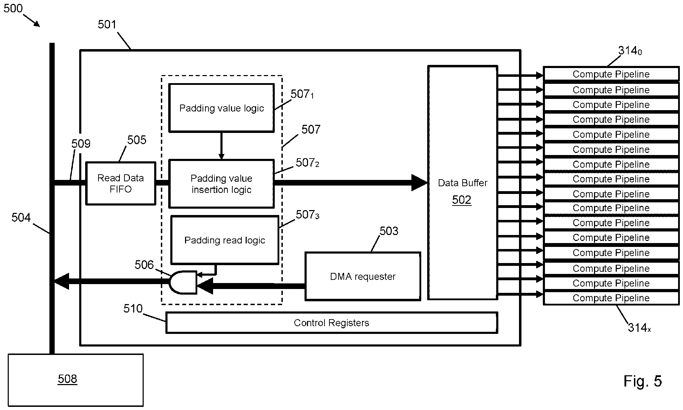

A problem with the addition of padding to the input feature map 401 is that this requires additional storage in the array 302 from which the pipeline loader 306 loads elements of the input feature map 401 for the compute pipes 314. This problem is addressed by the convolution layer processor 500 illustrated schematically in Figure 5. The convolution layer processor 500 comprises a memory access module 501 and a plurality of convolution modules, or compute pipes, 314₀₋ₓ. The convolution modules 314₀₋ₓ are similar to those described above. The memory access module 501 comprises a data buffer 502, which provides data to each of the convolution modules 314₀₋ₓ. Data provided to the data buffer 502 is requested and read from memory via a memory bus interface 502. A DMA (direct memory access) requester 503, configured by control registers 510, generates read request addresses and performs a traversal pattern of memory requests for each input feature map, as described in more detail below. Data is read from memory via the data bus 504 and a read data FIFO buffer 505 and is provided to the data buffer 502. A pad supervisor 507 operates between the data buffer 502 and the data bus 504 to control the input of padding pixels where required. The pad supervisor 507 allows through any requests which are for non-padded locations and provides read data from the read data FIFO to the data buffer 502 for non-padded locations. A request from the DMA requester 503 will only be allowed to propagate through to the data bus 504 if access is required for a non-padded location. The pad supervisor 507 comprises padding value logic 507₁, padding value insertion logic 507₂ and padding read logic 507s connected to an AND gate 506. The padding value logic 507₁ functions to determine when data should be loaded from the read data FIFO buffer 505 and when a pad value should be inserted. The pad value insertion logic 507₂ operates to insert pad values at locations specified by the padding value logic 507₁.

If a read request from the DMA requester 503 is for a padded location, the padding read logic 507s of the pad supervisor 507 will gate away the request, meaning that the request to the data bus 504 will become 0, resulting in no read request being made. This is represented in Figure 5 by an AND gate 506, which allows a data request through to the bus interface 502 only if a logic 1 is provided by the padding read logic 507s.

In a read return path 509, data arriving from the data bus 504 is stored in a FIFO read data buffer 505 to enable the pad supervisor 507 to insert padding for some pixels in place of data from the memory 508. The pad supervisor 507 controls whether a pad value is sent to the data buffer 502 or data from the FIFO buffer 505 corresponding to a read request from the DMA requester 503.

The returned data, whether a pad value or data read from the memory 508, is stored in the data buffer prior to being fed to the compute pipelines 314₀₋ₓ. The compute pipelines 314₀₋ₓ may be any kind of compute resource capable of performing convolution operations. Each compute pipeline may for example be a RISC CPU. The data buffer 502 may be a register bank where each pipeline 314₀₋ₓ is provided two words arranged in a ping pong manner. This means that, while a first (ping) side is loaded for all compute resources, a second (pong) side is used by the compute pipelines. Vice versa, once the second (pong) data is fully consumed and its related compute is done, the second (pong) side can be loading from the data bus 504, whilst consuming the first (ping) side.

The pad supervisor 507 is configured to include padding elements when elements of the input feature map are requested by the DMA requester 503 that require padding, without having to retrieve them from the memory 508. Convolution operations with arbitrarily large padding, striding and dilation can thereby be performed without any physical padding being stored in memory. This may work for convolution operations as well as for depthwise convolution and deconvolution operations. The convolution layer processor 500 allows for a mechanism to allow small tiles of data for ordinary convolution while maintaining symmetry, i.e. weight sharing between the compute pipes 314. In a particular example, 16 pipelines may be used in parallel, each pipeline configured to work on a different convolution position with the same weights. In an example implementation with 16 pipelines, the pad supervisor 507 may require around 2,000 gates to track padding for all 16 pipelines. A 4-dimensional address loading loop in the DMA requester 503 may require around 3,000 gates. To program the DMA requester 503 and pad supervisor 507, a software routine stored in the control registers 510 may be implemented to enable the DMA requester 503 to track across a 3-dimensional input feature map (i.e. across height, width and channel), distributing the convolution tasks to the pipelines in an efficient way in which all pipelines are utilised wherever possible.

The pad supervisor 507 operates to suppress any read of data from memory if it is deemed to be a position of padding. An example section of pseudo code defining a canvas loader algorithm for the DMA requester 503 to perform read operations including the pad supervisor 507 is provided below.

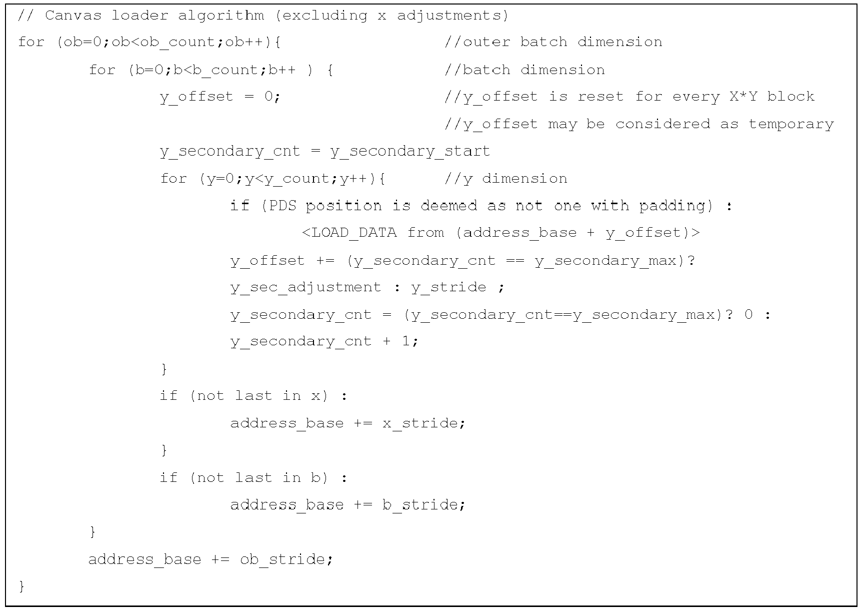

In accordance with the above code, the pad supervisor 507 checks for each position whether the current position is deemed to be not one with padding, in which case data is loaded from the address base plus the current offset position. Otherwise, if the current position is one with padding, the pad supervisor provides the data directly to the data buffer 502.

The data canvas loader defined above, which defines the DMA requester 503, consists of a 4 deep series of nested loops. The innermost dimension (Y) is responsible for loading a given input word relating to a position of a word of weights. For example, at a second pixel of a top line in convolution, this loop dimension is used to load every pipeline for its respective second pixel at the top line of its convolution field. This means striding by a regular stride, with an adjustment whenever an end of line is reached. To do this, a regular stride and an adjusted stride are set. A parallel mechanism tracks whether an adjusted stride is required. This adjustment may happen 0 times in a given loading of pipelines if all positions are along a horizontal line without discontinuity, or may happen one or more times if an end of line is encountered. All additions of the Y dimension to the base address are temporary, meaning that at the end of this loop dimension the process returns to the original position.

The DMA requester 503 is able to traverse an input feature map with arbitrary padding and with a defined stride and dilation by being programmed using a nested series of loops together with a programmable start count that can be adjusted after each series of loops read elements for each of the plurality of convolution modules 314₀₋ₓ. Each pipeline then operates on computing a consecutive location of the feature map output.

The DMA requester 503 loads one word of data corresponding to a given coordinate of the convolution filter at a time.

The DMA requester 503 loads, in sequence, the data word corresponding to a given position in convolution to first pipeline, then in a next cycle for the second pipeline and so on until reaching the final pipeline. Once all pipeline data has been loaded for a given position, the DMA requester advances to the next horizontal position and feeds all pipelines again. Once the full horizontal dimension is complete for a convolution position, the DMA requester 503 advances to the next vertical position and again sweeps the input feature map horizontally until all data required for the convolution operation (in one convolution position per pipeline) has been provided to all pipelines.

The DMA requester 503 is designed such that it can be programmed with addressing and strides as though padding were present in the input feature map. The pad supervisor 507 tracks the position of the first pipeline in the image as well as the position each data request in terms of the x,y position within the kernel at any given time. The pad supervisor 507 uses this information to check cycle-by-cycle if the data being read for a given pipeline is within a padded region or not. Based on this, the pad supervisor 507 can suppress reads requests from the DMA requester if the position being read would be a pad position. If so, the pad supervisor 507 inserts the pad value into the data buffer for reads that were supressed.

In a general aspect therefore, the DMA requester 503 is configured to request the plurality of elements of the input feature map for the respective plurality of convolution modules 314₀₋ₓ according to a sequence defined by a nested series of loops comprising a first loop defining elements across the width of the input feature map and a second loop defining elements across the height of the input feature map. The nested series of loops is a single set that serves all pipelines (convolution modules). The series of loops includes within an inner loop an address adjustment based on a separate count from a selectable count start position, for example as outlined in the above pseudo code by the variables y_sec_adjustment, y_secondary_cnt, y_secondary_max. The adjustment is temporary, in that it does not affect the outcome (address calculations) of the outer loops.

In the example illustrated in Figure 4, an output feature map width of 5 pixels is used. Therefore, the Y count for adjustment is 5, meaning that a discontinuity is added every 5 positions.

At the start, the count is set to 0. A first adjustment is applied after reading pixels shown in Figure 4 as 0,1,2,3,4. The above pseudo code represents how a hardware loop would be arranged to perform the read operations. The Y secondary adjustment takes into account a total number of reads before adjustment and the start position for the count based on the current position for the for the first pipeline.

The X Dimension can be used to load consecutive words of data horizontally. If the dilation is 1, the X dimension can traverse until the end of line of the convolution receptive field. If the dilation is larger than 1, the X dimension traverses a single pixel across all input channels.

The batch dimension can be used to collect a line together for dilated convolution, or can be skipped (i.e. kept to 1 meaning it is not a loop). The outer batch will collect together multiple lines which constitute the convolution.

The pad supervisor module 507 operates such that padding is considered to physically exist in memory, i.e. a data pointer can point to an address where the padding would be if it existed. The pad supervisor then provides the padding data and suppresses a data read request for any padding pixels, providing the padding data directly instead.

The pad supervisor module is provided the following information to be able to suppress reads that would be directed to padding:
- The X and Y position in the input feature map of the starting point for the first pipeline. This position may be calculated as though padding was included physically in memory.
- The input feature map dimensions (Height, Width, Channels).
- Stride and Dilation options, which can be different for height vs width.
- The kernel size (Height, Width).
- The pad amount for Top, Left, Bottom and Right of the input feature map.

The pad supervisor module keeps track of the position that the first compute pipe 314-0 (Figure 5) is at for any given read. A temporary addition of stride (with wrapping round if beyond if the last position in a line) may be made to determine the X and Y positions for any given pipeline at the time of its read. Padding is added if the current X position is smaller than the left padding, or is larger than the left padding plus the input feature map width, or if the Y position is smaller than the top padding or larger than the top padding plus the input feature map height.

Within any pixel, a number of channels may be defined, which can also be tracked.

The Y adjustment may be set to include no right padding but to include left padding as though it were in memory. This can effectively mean that the left padding is subtracted from where the next line would start. This means that, if all pad location reads are suppressed, the same DMA loading nested loop pattern can be used as though padding were physically present in RAM.

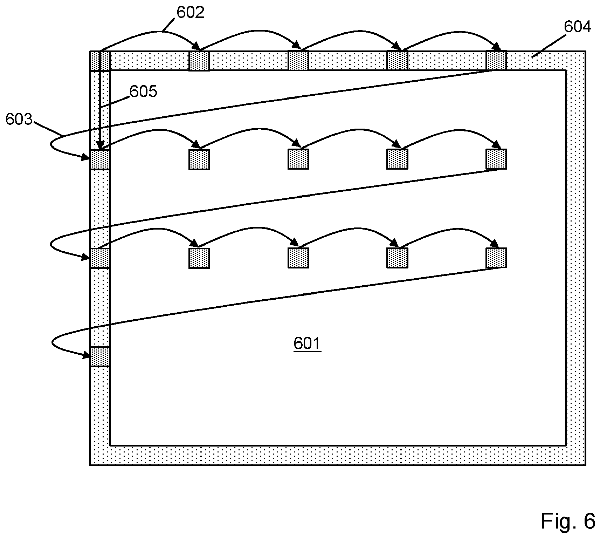

Figure 6 illustrates schematically a sequence of elements of an input feature map 601 to be loaded for being convolved by a plurality of parallel compute pipelines. A single pixel padding 604 is added around the boundary of the input feature map 601. The number of pipelines in this example is 16. The output feature map width is 5 pixels and the input feature map 601 is 25 pixels. The y-stride 602, i.e. the separation across the input feature map width between each element, is therefore set to 5 pixels. A dilation 605, i.e. a distance between adjacent pixels across a height of the input feature map 601, is in this example also set to 5 pixels. Following 4 y-strides, a y-adjust 603 is made to select the first pixel of the next row to be selected. In this example therefore, for every 5 positions a discontinuity is added. The process repeats until all pipelines are filled.

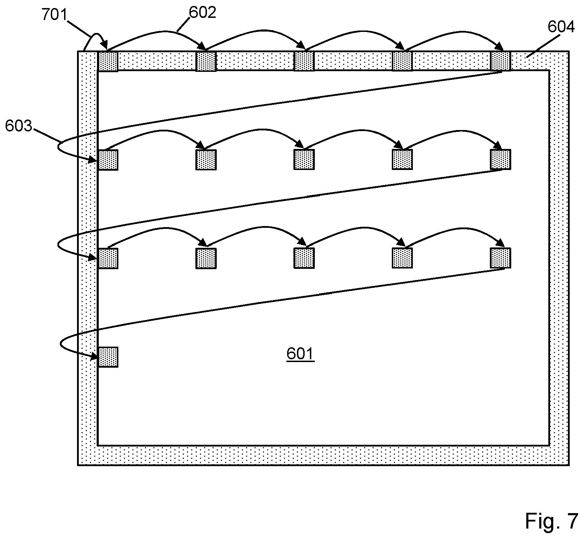

Once the pipelines are filled, the starting position is updated with an x-stride 701, as shown in Figure 7, to move the starting position on to the next pixel across the width of the input feature map 601. The pipelines are then loaded again, with one read per pipeline. The y-stride and y-adjust steps 602, 603 are applied relative to the base pointer, which remains unchanged until another dimension increments, i.e. any of x, batch and outerbatch according to the above algorithm.

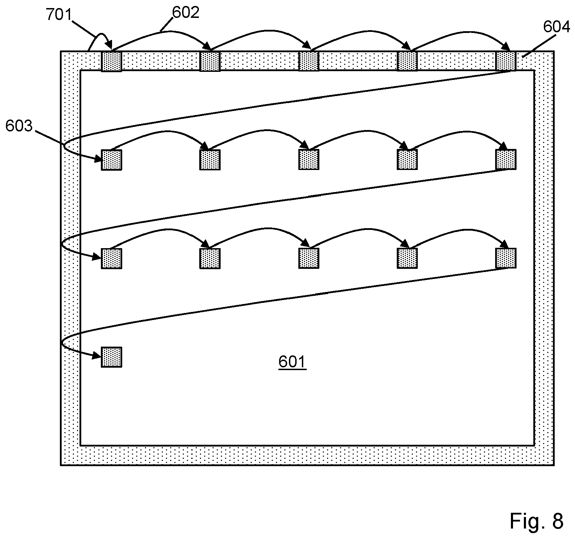

Following from Figure 7, once all pipelines have been loaded a further x-stride 701 is added to the base pointer, as shown in Figure 8, and the y dimension is loaded again, with one read for each pipeline.

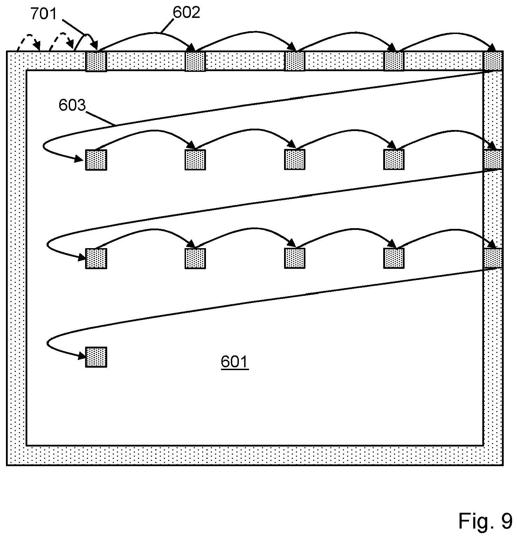

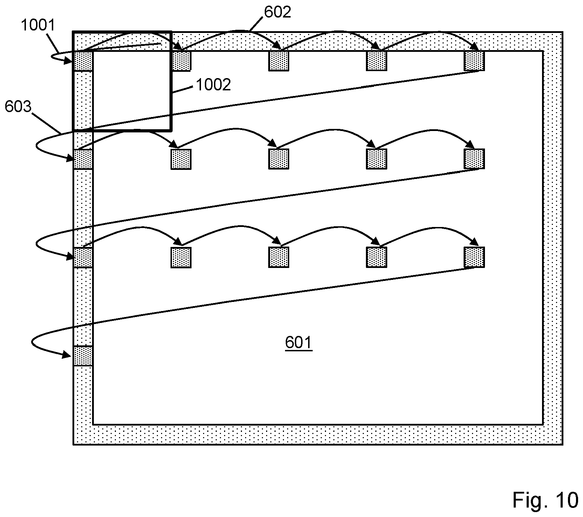

Further x-stride additions are made until all pixels along the width of the input feature map 601 have been read. Figure 9 shows the pipeline reads from the input feature map 601 once 4 x-strides have been made. The next operation is to apply a batch stride 1001, which moves the starting point for the next set of data reads to the next row of the input feature map 601, as illustrated in Figure 10. The sequence of applying y-stride and x-stride adjustments then repeats until the next row is read.

If there is no dilation in height, when the batch dimension is complete the convolution region is completed for a region of the input feature map in the form of a rectangle of size (x_dim*x_stride)*batch_dim. The rectangle is the region on which convolutions are being performed. For example, if the filter kernel is 3x3*C, where C is number of channels, the rectangle is the region of 3*3*C bytes, which each pipeline will have seen in the process of computing a single complete convolution operation in a given position.

The effect of the above example is that any given pipeline traverses a small region 1002 of the input feature map through operation of the x-stride and batch-stride adjustments.

An advantage of the above arrangement is that the hardware requirements can be kept small. This allows for duplication so that loader circuitry can be provided both in prefetcher (which issues requests to AXI-like bus which can accept multiple requests, but data returned will come at a latency), and in data canvas. By duplicating this logic, the pipeline loader can keep track of what should be loaded and which data reads are not expected, allowing the pad supervisor to insert pad value accordingly. This allows for more requests and more reads to be made without filling up buffers with padded values. This allows the processor to keep ahead with requests and effectively hide any latency of response.

One convolution position is submitted for each pipeline for each software loop, which provides two advantages. Firstly, no hardcoding of the order is required in hardware, enabling a choice of whether large NNs are tiled by keeping that data the same (i.e. repeating the same positions) but with different weights being used from one job to next, i.e. working on the same data but different output channels, or continuing re-using the same weights but moving to a next data position. Secondly, this enables the hardware to be kept free from any form of multiplications which may be required to track of the current position based on strides, dilations, channel counts etc.

The software algorithm tracks the current position in input by taking the output X and Y coordinates and applying a stride to the starting point. This is simplified by assuming that input padding is present. The software algorithm repeats adjustment of Y if the output width is shorter than the number of pipelines. If the resulting output width is wider than the number of pipelines, a check can be made to determine a number of pipelines away from edge, which can be used as the count before adjustment and 0 as the start. If we are further away from edge, then we set count to 0 and start to 0 which means no adjustment will be made. To take an example, if 48 pixels of a 13*13 output feature map have already been produced, the output [x,y] position in the output feature map is [9,3] (48 is 3*13+9). From this position, it can be determined how far away a discontinuity is in reading the input. If the output line ends at 13-9=4, i.e. in 4 more pixels, the count y adjustment can be set to count in the loader to be a count of 13 and 9 as the starting point. In a scenario where there are more than 16 pixels from the edge, for example an output feature map which is 112 pixels wide and the current position is 54 horizontally, no y adjustment needs to take place. By tracking the output position, it can be determined what the next Y adjustment count and start point should be, or if no Y adjustment would need to take place for the coming compute job of 16 outputs.

The software routine will tend to take significantly less time than a convolution process, so the processes can occur in parallel, i.e. the next task can be started while the current convolution process is being carried out.

From reading the present disclosure, other variations and modifications will be apparent to the skilled person. Such variations and modifications may involve equivalent and other features which are already known in the art of memory systems, and which may be used instead of, or in addition to, features already described herein.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub-combination. The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

## Claims

1. A convolution layer processor (500) for a neural network accelerator, comprising:
a memory access module (501) configured to access elements of an input feature map (401) comprising a first array of pixels from a memory (508); and
a plurality of convolution modules (314₀₋ₓ), each convolution module configured to receive an element (402) of the input feature map (401) from the memory access module (501) and perform a convolution operation on the received element (402) of the input feature map (401) with a convolution kernel (405) comprising a second array of pixels to provide a corresponding element of an output feature map (403),
the memory access module (501) comprising:
a DMA requester (503) configured to request elements of the input feature map (401) from the memory (508) via a data bus (504);
a data buffer (502) configured to provide the requested elements to each of the plurality of convolution modules (314₀₋ₓ); and
a pad supervisor module (507) configured to provide to the data buffer (502), for each element requested by the DMA requester (503), padding pixels of the input feature map (401) if the requested element extends beyond a boundary of the input feature map (401).

2. The convolution layer processor (500) of claim 1, wherein the pad supervisor module (501) is configured to suppress data read requests from the DMA requester (503) for any padding pixels of the input feature map (401).

3. The convolution layer processor (500) of claim 1 or claim 2, wherein the pad supervisor module (507) comprises:
padding value logic (507₁) configured to determine when data is to be loaded from the memory via the buffer interface (502) and when padding values are to be inserted;
padding value insertion logic (507₂) configured to insert padding values; and
padding read logic configured to allow data read requests from the DMA requester (503) to the memory via the buffer interface (502) only for elements requiring no padding.

4. The convolution layer processor (500) of any preceding claim, wherein the convolution modules (314₀₋ₓ) are configured to operate in parallel.

5. The convolution layer processor (500) of any preceding claim, wherein the DMA requester (503) is configured to request subsequent elements of the input feature map (401) from the memory (508) while the convolution modules (314₀₋ₓ) are processing current elements of the input feature map (401).

6. The convolution layer processor (500) of any preceding claim, wherein the DMA requester (503) is configured to request a plurality of elements of the input feature map (601), the plurality of elements having a stride (602) defining a separation between adjacent ones of the plurality of elements across a width of the input feature map (601) and a dilation (605) defining a separation between adjacent ones of the plurality of elements across a height of the input feature map (601).

7. The convolution layer processor (500) of claim 6, wherein the DMA requester (503) is configured to request the plurality of elements of the input feature map (601) for the respective plurality of convolution modules (314₀₋ₓ) according to a sequence defined by a nested series of loops comprising a first loop defining elements across the width of the input feature map (601) and a second loop defining elements across the height of the input feature map (601).

8. The convolution layer processor (500) of claim 6 or claim 7, wherein the stride (602) is greater than one and the pipeline loader module (306) is configured to request one or more subsequent pluralities of elements from the input feature map (601) with a starting point shifted along the width of the input feature map (601) relative to a preceding starting point.

9. The convolution layer processor (500) of any one of claims 6 to 8, wherein the dilation (605) is greater than one and the pipeline loader module (306) is configured to request one or more subsequent pluralities of elements from the input feature map (601) with a starting point shifted along the height of the input feature map (601) relative to a preceding starting point.

10. The convolution layer processor (500) of any preceding claim, wherein the plurality of convolution modules (314₀₋ₓ) comprises 16 convolution modules (314₀₋ₓ).

11. The convolution layer processor (500) of any preceding claim, wherein the pad supervisor module (507) is configured to provide a padding pixel for a requested element of the input feature map (401, 601) if a position of the requested element is from a position that is selected from:
a position across the width of the input feature map (401, 601) that is smaller than a left padding width of the input feature map (401, 601);
a position across the width of the input feature map (401, 601) that is larger than the left padding width plus a width of the input feature map (401, 601);
a position across the height of the input feature map (401, 601) that is smaller than a top padding width of the input feature map (401, 601); and
a position across the height of the input feature map (401, 601) that is larger than the top padding width plus the height of the input feature map (401, 601).

12. A neural network accelerator (202) comprising the convolution layer processor (500) of any preceding claim, the neural network accelerator (202) comprising a bus interface (214) configured to receive input feature map data from the memory (508) via a system bus (220, 504).

13. A method of operating a convolution layer processor (500) for a neural network accelerator, the convolution layer processor (500) comprising:
a memory access module (501) configured to access elements of an input feature map (401) comprising a first array of pixels from a memory (508); and
a plurality of convolution modules (314₀₋ₓ), each convolution module configured to receive an element (402) of the input feature map (401) from the memory access module (501) and perform a convolution operation on the received element (402) of the input feature map (401) with a convolution kernel (405) comprising a second array of pixels to provide a corresponding element of an output feature map (403),
the memory access module (501) comprising:
a DMA requester (503) configured to request elements of the input feature map (301) from the memory (508) via a data bus (504);
a data buffer (502) configured to provide the requested elements to each of the plurality of convolution modules (314₀₋ₓ); and
a pad supervisor module (507) configured to provide to the data buffer (502), for each element requested by the DMA requester (503), padding pixels of the input feature map (401) if the requested element extends beyond a boundary of the input feature map (401),
the method comprising:
the DMA requester (503) requesting a plurality of elements of the input feature map (401) from the memory (508);
the pad supervisor module (507) providing, for each of the requested plurality of elements extending beyond the boundary of the input feature map (401), a padding pixel to the data buffer (502) and, for each of the requested elements within the input feature map (401), an element stored in the memory (508) to the data buffer (502);
the data buffer (502) providing the requested plurality of elements to the plurality of convolution modules (314₀₋ₓ); and
the plurality of convolution modules (314₀₋ₓ) performing a convolution operation on the corresponding plurality of elements in parallel.

14. The method of claim 13, wherein the plurality of elements has a stride (602) defining a separation between adjacent ones of the plurality of elements across a width of the input feature map (601) and a dilation (605) defining a separation between adjacent ones of the plurality of elements across a height of the input feature map (601).

15. The method of claim 14, wherein the DMA requester (503) requests the plurality of elements of the input feature map (601) for the respective plurality of convolution modules (314₀₋ₓ) according to a sequence defined by a nested series of loops comprising a first loop defining elements across the width of the input feature map (601) and a second loop defining elements across the height of the input feature map (601).
